# EUROPÄISCHE PATENTSCHRIFT

(11) **EP 3 339 100 B1**
(45) Veröffentlichungstag und Bekanntmachung des Hinweises auf die Patenterteilung: **05.06.2019**
(21) Anmeldenummer: 18157298.3
(22) Anmeldetag: 24.03.2015
(51) Int. Cl.: B60R 3/02, B60R 3/00

(54) **FAHRZEUGFRONT MIT FRONTAUFSTIEGSLEITER**
VEHICLE FRONT WITH FRONT LADDER
AVANT DE VÉHICULE DOTÉ D'UNE ECHELLE D'ACCÈS

(30) Priorität: 12.08.2014 DE 102014011916
(43) Veröffentlichungstag der Anmeldung: 27.06.2018
(62) Teilanmeldung aus: 15000864.7
(73) Patentinhaber: MAN Truck & Bus AG, 80995 München (DE)
(72) Erfinder: Mangold, Markus, 85221 Dachau (DE); Braun, Christian, 85757 Karlsfeld (DE)
(74) Vertreter: v. Bezold & Partner Patentanwälte - PartG mbB

(56) Entgegenhaltungen:
- DE-U- 6 933 420
- JP-U- H0 576 886
- US-A1- 2013 154 229

## Beschreibung

Die Erfindung betrifft eine Fahrzeugfront, insbesondere eine Lastkraftwagen- oder Omnibusfront, mit einer Frontleiter, über die ein Nutzer die Frontscheibe von außen erreichen kann, z. B., um die Frontscheibe zu reinigen oder zu enteisen.

Frontscheiben von Lastkraftwägen oder Omnibussen sind in der Regel so hoch angeordnet, dass sie von Nutzern (z. B. Fahrern) nicht ohne Weiteres zur Reinigung oder Enteisung erreicht werden können. In der Praxis kommt es deshalb vor, dass Nutzer Hilfsgegenstände, wie z. B. Kisten oder Ähnliches, vor die Fahrzeugfront stellen, dann auf die Hilfsgegenstände aufsteigen und daraufhin die Frontscheibe reinigen oder enteisen. Aus der JP H05 76886 U ist bereits eine Fahrzeugfront gemäß dem Oberbegriff des Anspruches 1 bekannt. Eine Aufgabe der Erfindung ist es, eine verbesserte Möglichkeit zu schaffen, mittels der die Frontscheibe eines Nutzfahrzeugs z. B. zu Reinigungs- oder Enteisungszwecken von einem Nutzer erreicht werden kann.

Diese Aufgabe kann mit den Merkmalen des unabhängigen Anspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung schafft eine Fahrzeugfront, insbesondere eine Lastkraftwagen- oder Omnibusfront. Die Fahrzeugfront umfasst eine Frontaußenhaut (z. B. aus Blech und/oder Kunststoff) und eine Frontscheibe und zeichnet sich insbesondere durch eine (Front-) Leiter aus. Die Leiter ist mittels einer Leiterbasis vorzugsweise fahrzeugfest montierbar, z. B. an die Frontaußenhaut und/oder andere Teile des Fahrzeugs. Die Leiter ist so ausgeführt und angeordnet, dass ein Nutzer (z. B. Fahrzeug-Führer) über die Leiter die Frontscheibe z. B. zu Reinigungs- und/oder Enteisungszwecken von außen erreichen.

Die Leiter ist vorzugsweise eine teleskopierbare Leiter, insbesondere eine Teleskopleiter, und kann folglich zweckmäßig zusammengeschoben und auseinandergezogen werden.

Die Leiter ist über ein zweckmäßig fahrzeugfest montierbares Führungssystem (z. B. eine Führungsschiene) in Querrichtung der Fahrzeugfront verschiebbar.

Vorzugsweise ist die Leiterbasis der Leiter hinter der Frontaußenhaut fahrzeugfest montierbar und/oder hinter der Frontaußenhaut versteckt.

Es ist möglich, dass die Leiter mittels der Teleskopfunktion zumindest großteils hinter die Frontaußenhaut zweckmäßig nach oben zusammenschiebbar ist und somit insbesondere in eine versteckte Verstaustellung gebracht werden kann und/oder mittels der Teleskopfunktion aus der Verstaustellung zweckmäßig nach unten ausziehbar ist, um in eine Betriebsstellung gebracht zu werden.

Dadurch, dass die Leiter zumindest zum Großteil hinter der Frontaußenhaut verstaut werden kann, führt die Leiter während der Fahrt zu keiner oder nur zu einer unwesentlichen Erhöhung des Luftwiderstands, was insbesondere mit einem verbesserten Kraftstoffverbrauch einhergeht.

Die Fahrzeugfront umfasst zweckmäßig eine Frontöffnung, über die die Leiter zumindest großteils hinter die Frontaußenhaut zum Verstauen zweckmäßig nach oben eingeschoben werden kann und/oder über die die Leiter zweckmäßig nach unten ausgezogen werden kann, um in eine Betriebsstellung gebracht zu werden. Die Frontöffnung ist vorzugsweise im Wesentlichen nach unten gerichtet, um insbesondere zumindest zu keiner wesentlichen Luftwiderstandserhöhung zu führen.

Die Frontaußenhaut umfasst vorzugsweise ein oberes Frontaußenhautbauteil und ein unteres Frontaußenhautbauteil.

Die Frontöffnung wird vorzugsweise dadurch gebildet, dass das obere Frontaußenhautbauteil gegenüber dem unteren Frontaußenhautbauteil in Fahrzeuglängsrichtung nach vorne versetzt ist.

Die Leiter kann mittels der Teleskopfunktion zweckmäßig über die Frontöffnung nach oben hinter das obere Frontaußenhautbauteil zusammengeschoben werden und somit insbesondere in eine Verstaustellung gebracht werden und/oder aus der Verstaustellung über die Frontöffnungen zweckmäßig nach unten vor das untere Frontaußenhautbauteil ausgezogen werden, um in eine Betriebsstellung gebracht zu werden.

Zu erwähnen ist, dass im Rahmen der Erfindung eine fahrzeugfeste Montage insbesondere eine Montage an die Frontaußenhaut und/oder andere Teile des Fahrzeugs umfasst.

Die Erfindung ist nicht auf eine Fahrzeugfront beschränkt, sondern umfasst auch ein Fahrzeug, vorzugsweise einen Lastkraftwagen oder einen Omnibus, mit einer Fahrzeugfront wie hierin
offenbart. Es ist somit möglich, die teleskopierbare Leiter an einer Front- und/oder einer Heckseite eines Omnibusses vorzusehen.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine perspektivische Ansicht einer Fahrzeugfront von außen gemäß einer Ausführungsform der Erfindung, und
- Figur 2: zeigt eine perspektivische Ansicht der Fahrzeugfront der Figur 1 von innen.

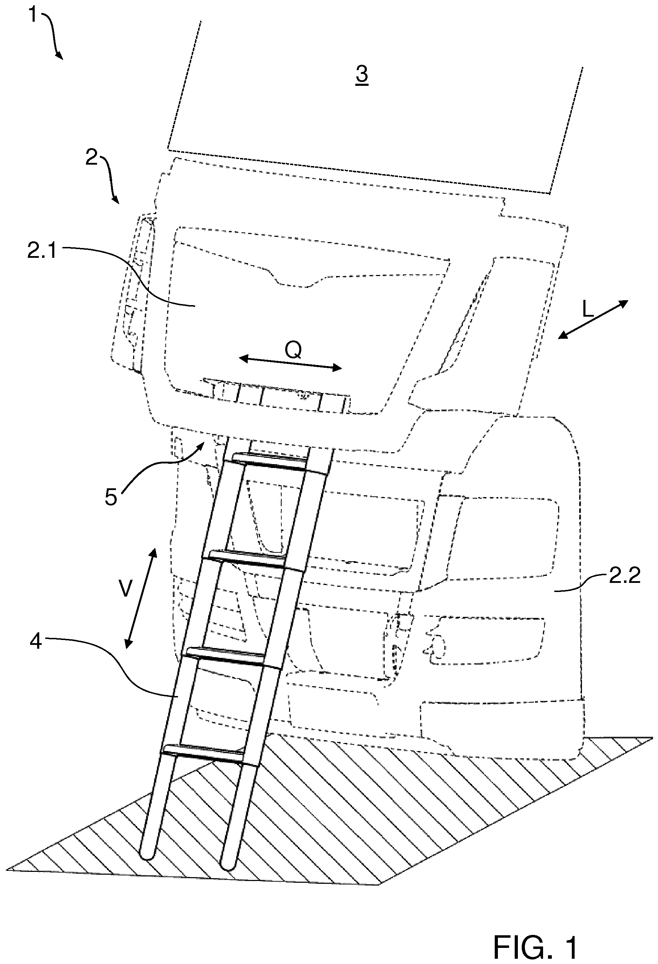

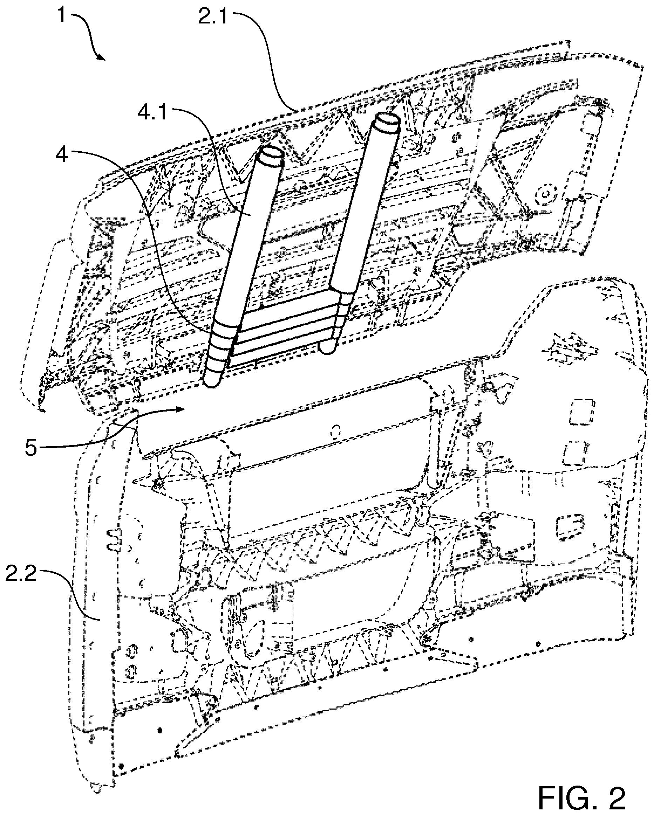

Figur 1 zeigt eine perspektivische Ansicht einer Fahrzeugfront 1, insbesondere einer Lastkraftwagen-Front, gemäß einer Ausführungsform der Erfindung von außen, während Figur 2 eine zugehörige perspektivische Ansicht von innen zeigt. Die Fahrzeugfront 1 wird nachfolgend unter gemeinsamer Bezugnahme auf die Figuren 1 und 2 beschrieben.

Die Fahrzeugfront 1 weist eine Frontaußenhaut 2 und darüber eine Frontscheibe 3 auf. Die Frontaußenhaut 2 umfasst ein oberes Fronaußenhautbauteil 2.1 (z. B. aus Blech und/oder Kunststoff) und ein unteres Frontaußenhautbauteil 2.2 (z. B. aus Blech und/oder Kunststoff).

Die Fahrzeugfront 1 zeichnet sich insbesondere durch eine Leiter 4 mit Teleskopfunktion aus, die mittels einer Leiterbasis 4.1 lösbar oder unlösbar fahrzeugfest montiert ist. Die Leiter 4 kann in eine Betriebsstellung nach unten auseinandergezogen werden und in eine Verstaustellung nach oben zusammengeschoben werden, was in Figur 1 schematisch durch den Pfeil V angedeutet ist. Figur 1 zeigt die Leiter 4 in ausgezogener Betriebsstellung, während Figur 2 die Leiter 4 in zusammengeschobener Verstaustellung zeigt.

Die Leiter 4 dient in Betriebsstellung dazu, dass ein Nutzer (z. B. Fahrzeug-Führer) die Frontscheibe 3 zu Reinigungs- und/oder Enteisungszwecken von außen erreichen kann.

Die Leiterbasis 4.1 kann optional an einem in den Figuren nicht gezeigten, fahrzeugfesten Führungssystem (z. B. Führungsschiene) montiert sein, um in Querrichtung Q der Fahrzeugfront 1 verschoben werden zu können.

Die Leiterbasis 4.1 der Leiter 4 ist hinter dem oberen Fronaußenhautbauteil 2.1 versteckt fahrzeugfest montiert. Mittels der Teleskopfunktion kann die Leiter 4 aufwärts hinter das obere Fronaußenhautbauteil 2.1 zusammengeschoben und somit in die Verstaustellung gebracht werden und aus der Verstaustellung abwärts auseinandergezogen werden, um in die Betriebsstellung gebracht zu werden. Die Frontaußenhaut 2 umfasst hierzu eine im Wesentlichen nach unten weisende Frontöffnung 5, die dadurch gebildet wird, dass das obere Frontaußenhautbauteil 2.1 gegenüber dem unteren Frontaußenhautbauteil 2.2 in Fahrzeuglängsrichtung L nach vorne versetzt ist. Über diese im Wesentlichen nach unten weisende Frontöffnung 5 kann die Leiter 4 hinter das obere Frontaußenhautbauteil 2.1 zusammengeschoben werden, um in die Verstaustellung gebracht zu werden, und ausgezogen werden, um in die Betriebsstellung gebracht zu werden.

Lastkraftwägen und Omnibusse weisen z. B. gegenüber Personenkraftwägen große Frontflächen auf, die während der Fahrt von Luft angeströmt werden. Dadurch, dass die Leiter 4 zumindest zum Großteil hinter dem oberen Fronaußenhautbauteil 2.1 verstaubar ist, führt die Leiter 4 während der Fahrt zu keiner oder nur zu einer unwesentlichen Erhöhung des Luftwiderstands, was mit einem verbesserten Kraftstoffverbrauch einhergeht. Die Fahrzeugfront 2 kann folglich mit Ausnahme der Frontöffnung 5, die allerdings im Wesentlichen nach unten gerichtet ist und insoweit ebenfalls zu keiner beachtlichen Strömungswiderstandserhöhung führt, quasi geschlossenflächig ausgeführt sein.

### Bezugszeichenliste

- 1: Fahrzeugfront
- 2: Frontaußenhaut
- 2.1: Oberes Frontaußenhautbauteil
- 2.2: Unteres Frontaußenhautbauteil
- 3: Frontscheibe
- 4: (Front-) Leiter
- 4.1: Leiterbasis
- 5: Frontöffnung
- Q: Querrichtung der Fahrzeugfront
- L: Längsrichtung des Fahrzeugs

## Patentansprüche

1. Fahrzeugfront (1), vorzugsweise Lastkraftwagen- oder Omnibusfront, mit einer Frontaußenhaut (2), einer Frontscheibe (3) und einer Leiter (4), wobei die Leiter (4) mittels einer Leiterbasis (4.1) fahrzeugfest montierbar ist und ein Nutzer über die Leiter (4) die Frontscheibe (3) von außen erreichen kann, **dadurch gekennzeichnet, dass** die Leiter (4) über ein fahrzeugfestes Führungssystem in Querrichtung (Q) der Fahrzeugfront (1) verschiebbar ist.

2. Fahrzeugfront (1) nach Anspruch 1, wobei die Leiter (4) als Teleskopleiter ausgeführt ist.

3. Fahrzeugfront (1) nach einem der vorhergehenden Ansprüche, wobei die Leiterbasis (4.1) der Leiter (4) hinter der Frontaußenhaut (2) versteckt ist und/oder hinter der Frontaußenhaut (2) fahrzeugfest montierbar ist.

4. Fahrzeugfront (1) nach einem der vorhergehenden Ansprüche, wobei die Leiter (4) mittels der Teleskopfunktion hinter die Frontaußenhaut (2) zusammenschiebbar und somit in eine Verstaustellung bringbar ist und vorzugsweise aus der Verstaustellung ausziehbar ist, um in eine Betriebsstellung gebracht zu werden.

5. Fahrzeugfront (1) nach einem der vorhergehenden Ansprüche, mit einer Frontöffnung (5), über die die Leiter (4) hinter die Frontaußenhaut (2) zum Verstauen zusammengeschoben werden kann und vorzugsweise über die die Leiter (4) ausgezogen werden kann, um in eine Betriebsstellung gebracht zu werden.

6. Fahrzeug, vorzugsweise Lastkraftwagen oder Omnibus, mit einer Fahrzeugfront (1) nach einem der vorhergehenden Ansprüche.

## Claims

1. Vehicle front (1), preferably lorry front or bus front, with a front outer skin (2), a windscreen (3) and a ladder (4), wherein the ladder (4) can be mounted in a manner secured on the vehicle by means of a ladder base (4.1) and a user can reach the windscreen (3) from the outside via the ladder (4), **characterized in that** the ladder (4) is displaceable in the transverse direction (Q) of the vehicle front (1) via a guide system secured on the vehicle.

2. Vehicle front (1) according to Claim 1, wherein the ladder (4) is designed as a telescopic ladder.

3. Vehicle front (1) according to either of the preceding claims, wherein the ladder base (4.1) of the ladder (4) is concealed behind the front outer skin (2) and/or can be mounted in a manner secured on the vehicle behind the front outer skin (2).

4. Vehicle front (1) according to one of the preceding claims, wherein the ladder (4) can be pushed together behind the front outer skin (2) by means of the telescopic function and can therefore be brought into a storage position and can preferably be extended out of the storage position in order to be brought into an operating position.

5. Vehicle front (1) according to one of the preceding claims, comprising a front opening (5) via which the ladder (4) can be pushed together behind the front outer skin (2) for storage purposes and preferably via which the ladder (4) can be extended in order to be brought into an operating position.

6. Vehicle, preferably lorry or bus, with a vehicle front (1) according to one of the preceding claims.

## Revendications

1. Avant de véhicule (1), en particulier avant de camion ou d'autobus, avec une carrosserie avant (2), une vitre avant (3) et une échelle (4), dans lequel l'échelle (4) peut être fixée au véhicule au moyen d'une base d'échelle (4.1) et un utilisateur peut atteindre la vitre avant (3) par l'extérieur au moyen de l'échelle (4), **caractérisé en ce que** l'échelle (4) est déplaçable en direction transversale (Q) de l'avant de véhicule (1) au moyen d'un système de guidage fixe sur le véhicule.

2. Avant de véhicule (1) selon la revendication 1, dans lequel l'échelle (4) est une échelle télescopique.

3. Avant de véhicule (1) selon l'une quelconque des revendications précédentes, dans lequel la base d'échelle (4.1) de l'échelle (4) est masquée derrière la carrosserie avant (2) et/ou peut être fixée au véhicule derrière la carrosserie avant (2).

4. Avant de véhicule (1) selon l'une quelconque des revendications précédentes, dans lequel l'échelle (4) peut être rétractée derrière la carrosserie avant (2) au moyen de la fonction télescopique et peut ainsi être mise dans une position de rangement et elle peut de préférence être extraite de la position de rangement pour être mise dans une position d'utilisation.

5. Avant de véhicule (1) selon l'une quelconque des revendications précédentes, comportant une ouverture avant (5), par laquelle l'échelle (4) peut être rétractée pour son rangement derrière la carrosserie avant (2) et de préférence par laquelle l'échelle (4) peut être étendue, afin d'être mise dans une position d'utilisation.

6. Véhicule, de préférence camion ou autobus, comportant un avant de véhicule (1) selon l'une quelconque des revendications précédentes.
